# EUROPEAN PATENT APPLICATION

(11) **EP 4 672 291 A2**
(43) Date of publication of application: **31.12.2025**
(21) Application number: 25199566.8
(22) Date of filing: 09.07.2021
(51) Int. Cl.: H01H 33/74

(54) **GAS-INSULATED HIGH OR MEDIUM VOLTAGE CIRCUIT BREAKER**

(62) Divisional of application: 21184862.7
(71) Applicant: Hitachi Energy Ltd, 8050 Zürich (CH)
(72) Inventor: DHOTRE, Mahesh, 5200 Brugg (CH); VOSS, Robert, 8003 Zürich (CH); KOLLER, Christoph, 8317 Tagelswangen (CH); RAPHAEL, Rijo-Jude, 8052 Zürich (CH); FURRER, Nils Henrik, 211 12 Malmö (SE)
(74) Representative: Michalski Hüttermann & Partner Patentanwälte mbB

(57) **Abstract**

The invention relates to a gas-insulated high or medium voltage circuit breaker (1) comprising:
a first arcing contact (2) and a second arcing contact (3), whereby at least one of the two arcing contacts (2, 3) is axially movable along a switching axis (4), thereby forming, during a breaking operation, an arc (5) between the first arcing contact (2) and the second arcing contact (3) in an arcing region (6),
a buffer cylinder (17) including a channel (8) directed to the arcing region (6) and/or a nozzle (7) for blowing during the breaking operation an arc-extinguishing gas to the arcing region (6);
a first enclosure (18) associated to first arcing contact (2) substantially surrounding the buffer cylinder (17) and arranged slidable in respect to the buffer cylinder (17) and/or a second enclosure (11) substantially surrounding the nozzle (7) and arranged slidable in respect to the nozzle (7); and
a labyrinth structure (13, 13') provided in the first enclosure (18) and/or in the buffer cylinder (17) between the first enclosure (18) and the buffer cylinder (17) and/or in the second enclosure (11) and/or in the nozzle (7) between the second enclosure (11) and the nozzle (7).

## Description

### Technical Field

The invention relates to a gas-insulated high or medium voltage circuit breaker comprising a first arcing contact and a second arcing contact, whereby at least one of the two arcing contacts is axially movable along a switching axis, thereby forming, during a breaking operation, an arc between the first arcing contact and the second arcing contact in an arcing region; a buffer cylinder including a channel directed to the arcing region and/or a nozzle including a channel directed to the arcing region, for blowing an arc-extinguishing gas to the arcing region during the breaking operation, and a first enclosure associated to first arcing contact substantially surrounding the buffer cylinder and arranged slidable in respect to the buffer cylinder and/or a second enclosure substantially surrounding the nozzle and arranged slidable in respect to the nozzle.

### Background Art

Circuit breakers are well known in the field of medium and high voltage switching applications and are predominantly used for interrupting a current, when an electrical fault occurs. As an example, circuit breakers have the task of opening contacts and keeping them apart from one another in order to avoid a current flow even in case of high electrical potential originating from the electrical fault itself. The circuit breaker may break medium to high short circuit currents of 1 kA to 80 kA at medium to high voltages of 12 kV to 72 kV and up to 1200 kV. The operation principle of circuit breakers is known. Such circuit breakers are arranged in the respective electrical circuits which are intended to be interrupted based on some predefined event occurring in the electrical circuit.

Generally, operation of such circuit breakers is responsive to detection of a fault condition or fault current. On detection of such a fault condition or fault current, a mechanism may operate the circuit breaker so as to interrupt the current flowing there through, thereby interrupting the current flowing in the electrical circuit. Once a fault is detected, contacts within the circuit breaker separate in order to interrupt the electrical circuit. Often spring arrangements, pneumatic arrangements or some other means utilizing mechanically stored energy are employed to separate the contacts. Some of the energy required for separating the contacts may be obtained from the fault current itself. When interrupting the current flowing in the electrical circuit, an arc is generally generated. This arc must be cooled so that it becomes quenched or extinguished, such that the gap between the contacts repeatedly can withstand the voltage in the electrical circuit. It is known to use, air, oil or insulating gas as medium in which the arc forms. Insulating gas comprises for example Sulphur hexafluoride (SF6) or CO2.

WO 2014/096460 A1 describes an electrical switching device comprising an arcing contact arrangement with a first arcing contact attached to an exhaust tube and a mating second arcing contact.

US 2018/342363 A1 describes a gas blast switch comprising a gas channel connecting an arcing region to a gas storage chamber delimited by radially opposite inner and outer walls and axially opposite first and second end walls and a flow guiding radial wall extends in the gas storage chamber spaced from each wall delimiting the chamber.

FR 2 867 604 A1 describes an electrical power switch which uses a compressed gas for the extinguishing of arcs between contacts.

US 2015/014280 A1 describes a switchgear which includes an interrupter unit. The interrupter unit is provided with first and second switching contact pieces that are movable relative to one another.

In metal-enclosed breakers, hot insulating gas from the arc-zone escapes towards an exhaust volume provided at an end portion of the circuit breaker. The insulating gas is then cooled by mixing with cold insulating gas and released into a tank of the circuit breaker. If the exhaust volume is not sealed properly and leaks, hot insulating gas or particles may end up in dielectrically critical regions, which negatively affects operational stability of the circuit breaker.

### Summary of invention

It is therefore an object of the invention to provide an improved circuit breaker, in particular a metal enclosed circuit breaker, having a better sealing in respect to the insulating gas.

The object of the invention is solved by the features of the independent claim. Modified implementations are detailed in the dependent claims.

Thus, the object is solved by a gas-insulated high or medium voltage circuit breaker comprising:
a first arcing contact and a second arcing contact, whereby at least one of the two arcing contacts is axially movable along a switching axis, thereby forming, during a breaking operation, an arc between the first arcing contact and the second arcing contact in an arcing region;
a buffer cylinder including a channel directed to the arcing region and/or a nozzle for blowing during the breaking operation an arc-extinguishing gas to the arcing region;
a first enclosure associated to first arcing contact substantially surrounding the buffer cylinder and arranged slidable in respect to the buffer cylinder and/or a second enclosure substantially surrounding the nozzle and arranged slidable in respect to the nozzle; and
a labyrinth structure provided in the first enclosure and/or in the buffer cylinder between the first enclosure and the buffer cylinder and/or in the second enclosure and/or in the nozzle between the second enclosure and the nozzle.

A key point of the proposed solution is therefore the labyrinth structure, which provides flow induced sealing. The labyrinth structure traps hot arc-extinguishing gas for mixing with cold arc-extinguishing gas. Eventually the gas may leave the labyrinth structure towards a sealing next to a spiral contact of the circuit breaker with a lower velocity. The labyrinth structure advantageously increases probability that no hot arc-extinguishing gas/particle gets out into dielectrically critical regions of the circuit breaker. Experiments demonstrated that due to the labyrinth structure, less burning and limited presence of flakes were found inside the circuit breaker. The proposed labyrinth structure protects both the sealing and a copper tube surface of the circuit breaker from generating copper sulfide particles. In sum, the labyrinth structure decreases failures of the sealing, provides an easy and reliable implementation, and provides a lower temperature at the copper tube surface, and hence less copper sulfide flakes.

The term high or medium voltage relates to voltages that exceeds 1 kV. A medium voltage preferably concerns nominal voltages in the range from 12 kV to 72 kV (medium voltage range), like 25 kV, 40 kV or 60 kV. A high voltage preferably relates to nominal voltages in the range from above 72 kV to 550 kV, like 145 kV, 245 kV or 420 kV. Nominal currents of the circuit breaker can be preferably in the range from 1 kA to 5 kA. The current which flows during the abnormal conditions in which the circuit breaker performs its duty may be appropriately referred to as referred to as the breaking current or the short circuit current. The short circuit current may be in the range from 31.5 kA to 80 kA, which is termed high short-circuit current duty. During a breaking operation, breaking voltages may be very high, e.g., in the range from 110 kV to 1200 kV.

The term "axial" designates an extension, distance etc. in the direction of the axis. An axial separation between parts means that these parts are separated from each other when seen or measured in the direction of the axis. The term "radial" designates an extension, distance etc. in a direction perpendicular to the axis. The term "cross-section" means a plane perpendicular to the axis, and the term "cross-sectional area" means an area in such a plane. The axis can be, for example, the switching axis.

A circuit breaker can include a nominal contact or nominal current path. As used herein, an electrical contact through which the nominal current passes, i.e. a nominal current path, is called a nominal contact, and the combination of the nominal contact and an arcing contact is called henceforth "breaker contact". As used herein, at least one of the breaking contacts relatively moves with respect to the other breaker contact. That is to say, at least one of the breaker contacts is moving.

In a gas-insulated circuit breaker, the arc-extinguishing medium comprises a gas. In implementations, the circuit breaker can include an encapsulating housing which defines a volume for the gas. According to some embodiments, the circuit breaker can include a gas blowing system configured to extinguish an arc formed between a first arcing contact and a second arcing contact of the circuit breaker during a stage of the current interruption operation.

The arc-extinguishing gas can be any suitable gas that enables to adequately extinguish the electric arc formed between the arcing contacts during a current interruption operation, such as, but not limited, to an inert gas as, for example, sulfur hexafluoride SF6. Thereby, the arc between the first and second arcing contacts develops in the arcing region. Specifically, the arc-extinguishing gas used in the circuit breaker can be SF6 gas or any other dielectric insulation medium, may it be gaseous and/or liquid, and in particular can be a dielectric insulation gas or arc quenching gas. Such dielectric insulation medium can for example encompass media comprising an organofluorine compound, such organofluorine compound being selected from the group consisting of: a fluoroether, an oxirane, a fluoroamine, a fluoroketone, a fluoroolefin, a fluoronitrile, and mixtures and/or decomposition products thereof. Herein, the terms "fluoroether", "oxirane", "fluoroamine", "fluoroketone", "fluoroolefin" and "fluoronitrile" refer to at least partially fluorinated compounds. In particular, the term "fluoroether" encompasses both hydrofluoroethers and perfluoroethers, the term "oxirane" encompasses both hydrofluorooxiranes and perfluorooxiranes, the term "fluoroamine" encompasses both hydrofluoroamines and perfluoroamines, the term "fluoroketone" encompasses both hydrofluoroketones and perfluoroketones, the term "fluoroolefin" encompasses both hydrofluoroolefins and perfluoroolefins, and the term "fluoronitrile" encompasses both hydrofluoronitriles and perfluoronitriles. It can thereby be preferred that the fluoroether, the oxirane, the fluoroamine and the fluoroketone are fully fluorinated, i.e. perfluorinated.

The dielectric insulation medium can be selected from the group consisting of: a hydrofluoroether, a perfluoroketone, a hydrofluoroolefin, a perfluoronitrile, and mixtures thereof. In particular, the term "fluoroketone" as used in the context of the present invention shall be interpreted broadly and shall encompass both fluoromonoketones and fluorodiketones or generally fluoropolyketones. Explicitly, more than a single carbonyl group flanked by carbon atoms may be present in the molecule. The term shall also encompass both saturated compounds and unsaturated compounds including double and/or triple bonds between carbon atoms. The at least partially fluorinated alkyl chain of the fluoroketones can be linear or branched and can optionally form a ring. The dielectric insulation medium may comprise at least one compound being a fluoromonoketone and/or comprising also heteroatoms incorporated into the carbon backbone of the molecules, such as at least one of: a nitrogen atom, oxygen atom and sulphur atom, replacing one or more carbon atoms. More preferably, the fluoromonoketone, in particular perfluoroketone, can have from 3 to 15 or from 4 to 12 carbon atoms and particularly from 5 to 9 carbon atoms. Most preferably, it may comprise exactly 5 carbon atoms and/or exactly 6 carbon atoms and/or exactly 7 carbon atoms and/or exactly 8 carbon atoms.

Further, the dielectric insulation medium may comprise at least one compound being a fluoroolefin selected from the group consisting of: hydrofluoroolefins (HFO) comprising at least three carbon atoms, hydrofluoroolefins (HFO) comprising exactly three carbon atoms, trans-1,3,3,3-tetrafluoro-1-propene (HFO-1234ze), 2,3,3,3-tetrafluoro-1-propene (HFO-1234yf), and mixtures thereof. The organofluorine compound can also be a fluoronitrile, in particular a perfluoronitrile. In particular, the organofluorine compound can be a fluoronitrile, specifically a perfluoronitrile, containing two carbon atoms, and/or three carbon atoms, and/or four carbon atoms. More particularly, the fluoronitrile can be a perfluoroalkylnitrile, specifically perfluoroacetonitrile, perfluoropropionitrile (C2F5CN) and/or perfluoro-butyronitrile (C3F7CN). Most particularly, the fluoronitrile can be perfluoroisobutyronitrile (according to the formula (CF3)2CFCN) and/or perfluoro-2-methoxypropanenitrile (according to formula CF3CF(OCF3)CN). Of these, perfluoroisobutyronitrile (i.e. 2,3,3,3-tetrafluoro-2-trifluoromethyl propanenitrile alias i-C3F7CN) is particularly preferred due to its low toxicity. The dielectric insulation medium can further comprise a background gas or carrier gas different from the organofluorine compound (in particular different from the fluoroether, the oxirane, the fluoroamine, the fluoroketone and the fluoroolefin) and can in embodiments be selected from the group consisting of: air, N2, O2, CO2, a noble gas, H2; NO2, NO, N2O; fluorocarbons and in particular perfluorocarbons, such as CF4; CF3I, SF6; and mixtures thereof. For example, the dielectric insulating gas can be CO2 in an embodiment.

The circuit breaker may include one or more components such as, a puffer-type cylinder, a self-blast chamber, a pressure collecting space, a compression space, or puffer volume, and an expansion space. The circuit breaker may effectuate interruption of the electrical circuit by means of one or more of such components, thereby discontinuing flow of electrical current in the electrical circuit, and/or extinction of the arc produced when the electrical circuit is interrupted. The circuit breaker can include also other parts such as a drive, a controller, and the like, which have been omitted in the description. These parts are provided in analogy to a conventional high or medium voltage gas-insulated circuit breaker.

Generally, various possibilities exist for implementation of the labyrinth structure. Preferably the labyrinth structure extends in axial direction and/or extends radially into the first enclosure and/or into the buffer cylinder, the nozzle and/or the insulating nozzle. According to a preferred implementation the labyrinth structure is provided as a plurality of distant notches arranged one behind each other. Preferably the notches extend in axial direction, are arranged in regular distances to each other and/or extend radially into the enclosure and/or into the insulating nozzle. The labyrinth structure respectively the notches advantageously create a flow pattern which cools down the arc-extinguishing gas. In another preferred implementation the notches comprise a square-like shape or a trapezoid-like shape. The squares can be provided as regular squares with rounded edges. Preferably the labyrinth structure and/or the notches extend circumferentially around the insulating nozzle and/or the notches are provided in a ring-like manner. In a further preferred implementation, the nozzle includes the channel directed to the arcing region, and a diffuser is provided adjacent to the channel, for transporting the gas from the arcing region to a buffer volume downstream of the diffuser. In this respect to the buffer cylinder may be axially fixed to the nozzle such that the channel can be circumferentially encased at least partially by both the buffer cylinder and the nozzle.

According to a preferred implementation the gas-insulated high or medium voltage circuit breaker comprises a sealing arranged circumferentially between the second enclosure and/or the first enclosure and the nozzle and/or the diffuser, wherein the labyrinth structure is axially arranged between the sealing and the channel and/or the buffer volume. Preferably the circuit breaker comprises two sealings arranged adjacent but distant to each other, whereby the sealings are provided in a ring-like manner circumferentially extending around the insulating nozzle. The sealing can be provided within a notch. Preferably the sealing is arranged at an end of the labyrinth structure adjacent thereto. Preferably both the first arcing contact and the second arcing contact each comprise a labyrinth structure and a respective sealing.

In another preferred implementation the second enclosure comprises an inner enclosure portion and a coaxially arranged outer enclosure portion and the sealing and/or labyrinth structure are provided between the inner enclosure portion and the nozzle and/or the insulating nozzle The outer enclosure portion can be provided movable relatively to the inner enclosure portion along the switching axis. Thus, the labyrinth structure can be provided at the first arcing contact and/or at the second arcing contact.

According to a preferred implementation, the gas-insulated high or medium voltage circuit breaker comprises a metal enclosure and wherein the circuit breaker is provided as metal enclosed circuit breaker.

In another preferred implementation the circuit breaker is a gas-insulated circuit breaker adapted to interrupt medium to high-voltages of 12 kV or more, 52 kV or more, or more than 72 kV, or 145 kV or more; and/or wherein the gas-insulated high or medium voltage circuit breaker is one of a puffer-type circuit breaker, a selfblast circuit breaker, or a combination thereof.

The object is further solved by a method of operating a gas-insulated high or medium voltage circuit breaker, the method comprising:
breaking an electric current with the high or medium voltage circuit breaker as described before.

According to a preferred implementation, breaking the electric current comprises:
separating the first arcing contact and the second arcing contact by moving at least one of the first and second arcing contact along the switching axis to initiate a breaking operation.

For breaking the electric current, the first arcing contact and the second arcing contact can be separated by moving at least one of the first and second arcing contact along the switching axis to initiate a breaking operation. Further, during the breaking operation, at least one of the inner enclosure portion and the outer enclosure portion can be moved relatively to each other along the switching axis, such that in the second state of motion a first aperture and a second aperture overlap and provide a through opening for the arc-extinguishing gas to be partially released from the buffer volume outside of the enclosure. By this, the temperature of the arc-extinguishing gas in the buffer volume can be decreased. Accordingly, also the probability or risk of a restrike or late restrike, i.e. a reignition of the arc, due to a flow reversal of heated gas from the buffer volume back to the arcing zone can be decreased.

Further implementations and advantages of the method are directly and unambiguously derived by the person skilled in the art from the circuit breaker as described before.

### Brief description of the drawings

These and other aspects of the invention will be apparent from and elucidated with reference to the implementations described hereinafter.

In the drawings:
- Fig. 1: shows a gas-insulated circuit breaker according to a preferred implementation in a schematic view, and
- Fig. 2: shows a partial view of the gas-insulated circuit breaker of Fig. 1 in a schematic view.

### Detailed Description of exemplary implementations

Although the following description is given with respect to a gas-insulted circuit breaker 1, and particularly with respect to a gas-insulated high or medium voltage circuit breaker 1 for medium and high voltage applications, it is to be understood that the implementations of the present disclosure are not limited thereto. Instead, the present implementations could be applied anywhere where a gas-insulated circuit breaker 1 is needed. For simplicity, implementations described herein often refer to a circuit breaker 1, instead of referring to a gas-insulated high or medium circuit breaker 1. The circuit breaker 1 may be a puffer type circuit breaker, a self-blast circuit breaker, a generator circuit breaker, a disconnector, a combined disconnector and circuit breaker, a live tank breaker, or a load break switch in power transmission and distribution systems. The circuit breaker 1 can comprise also other parts such as nominal contacts, a drive, a controller, and the like, which have been omitted in the Figures and are not described herein in detail. These parts are provided in analogy to a conventional high or medium voltage gas-insulated circuit breaker.

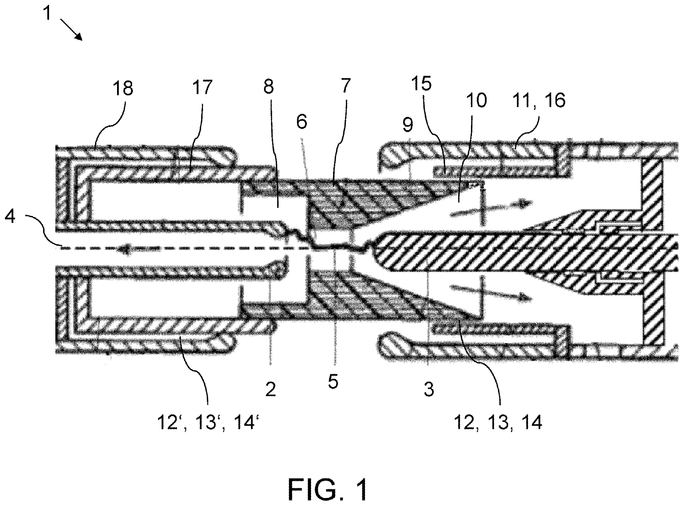

Fig. 1 shows a gas-insulated circuit breaker 1 according to a preferred implementation described herein, for high or medium voltages. The circuit breaker 1 includes a first arcing contact 2 and a second arcing contact 3. The first arcing contact 2 is in Fig. 1 exemplarily in the form of a tulip, e.g. a contact tulip, whereby the second arcing contact 3 is in the form of a rod, e.g. a contact rod. The two arcing contacts 2, 3 co-operate with each other between an open end-position, in which the two arcing contacts 2, 3 are completely electrically separated from each other, as shown in Fig. 1, and a closed end-position, in which an electric current can pass between them. The first acing contact 2 can for example be part of a first breaking contact having a first nominal contact, which is for simplicity not illustrated in Fig. 1. Further, the second arcing contact 3 can be part of a second breaking contact with a second nominal contact.

The first and the second arcing contacts 2, 3 are constituted in a manner such that they can conveniently carry an interruption current, so that the arcing contacts 2, 3 do not generate excessive heating and withstand the heat of an arc 5 generated during a current interruption operation of the circuit breaker 1. In particular, arcing contacts 2, 3 are made of any suitable material, typically arc-resistant material, that enables the circuit breaker 1 to function as described herein, such as exemplarily, but not limited to: copper, copper alloys, silver alloys, tungsten, tungsten alloys, or any combination(s) thereof. In particular, these materials are chosen on the basis of their electrical conductivity, hardness (i.e. resistance to abrasive wear), mechanical strength, low cost, and/or chemical properties. For example, the contact rod shown in Fig. 1 and forming the second arcing contact 3 is made of any suitable conductive material which enables the circuit breaker 1 to function as described herein, such as exemplarily, but not limited to, copper. If required, the contact rod may be made of different materials, for example, different parts thereof may be made of different materials or be coated with a material which provides adequate electrical and/or mechanical properties to each of these parts.

As indicated by arrows in Fig. 1, at least one of the first and the second arcing contact 2, 3, e.g. as part of the first breaking contact and the second breaking contact, is movable relatively to the other one along a switching axis 4 to bring the arcing contacts 2, 3 in the open end-position or in the closed end-position. In the closed end-position, the second arcing contact 3 is inserted into the first arcing contact 2. During the breaking operation, the first arcing contact 2 moves away from the second arcing contact 3 so that both contacts separate from one another. During the breaking operation, as shown in Fig. 1, arc 5 develops in the arcing region 6 between portions of the first and second arcing contact 2, 3.

The circuit breaker 1 shown in Fig. 1 is arranged in a gas-tight housing filled with an electrically insulating gas or arc-extinguishing gas. The volume between the housing and the components of the circuit breaker 1 shown in Fig. 1 is inside the gastight housing. The gastight housing can be constituted as an encapsulation, such as, but not limited to, a metallic or ceramic housing. Such encapsulation can be mounted on a suitable structure. The circuit breaker 1 further includes a nozzle 7 having a channel 8 directed to the arcing region 6 respectively the arc 5. The nozzle 7 serves as a blowhole for blowing the arc-extinguishing gas to the arcing region 6 during the breaking operation. Thereby, the arc 5 can be extinguished or quenched. The nozzle 7 includes an insulating nozzle 9. The arc-extinguishing gas for blowing out the arc 5 is provided in a volume upstream of the insulating nozzle 9. For example, the volume upstream of the insulating nozzle 9 can be filled with a dielectric gas, such as in embodiments CO2, SF6 or SF6 and its known mixtures, such as N2 or CF4. In further embodiments, also other insulating or arc-extinguishing gases are possible.

The insulating nozzle 9 is arranged adjacent to the channel 8, in the axial direction to the nozzle 7. A cross-sectional area of the insulating nozzle 9 may increase in the axial direction away from the nozzle 7. The nozzle 9 may form a diverging duct for the flow of the arc-extinguishing gas. Accordingly, the arc-extinguishing gas from the volume upstream of the insulating nozzle 9 is transported from the arcing region 6 to a region downstream of the insulating nozzle 9. The region downstream of the insulating nozzle 9 includes a buffer volume 10 provided directly downstream of the insulating nozzle 9. Accordingly, after the arc-extinguishing gas passes through the arcing region 6 and the insulating nozzle 9, the arc-extinguishing gas reaches the buffer volume 10. The buffer volume 10 is substantially surrounded by a second enclosure 11 circumferentially. That is to say, the second enclosure 11 can substantially delimit the radial extent of the buffer volume 10. The term "buffer volume directly downstream of the insulating nozzle" as used herein can be understood as in direct fluid communication with the arcing region 6.

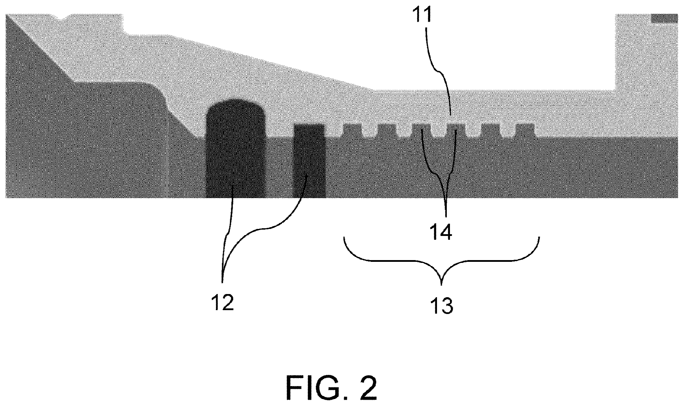

As can be seen from Fig. 1 and in more detail in Fig. 2, a labyrinth structure 13 is provided in the second enclosure 11 and/or in the insulating nozzle 9 between the second enclosure 11 and the insulating nozzle 9. Specifically, the labyrinth structure 13 is provided as a plurality of distant notches 14 arranged one behind each other. The notches 14 comprise a square-like shape, as shown in Fig. 2, or alternatively a trapezoid-like shape. The labyrinth structure 13 leads to flow turbulences capable of trapping the hot insulating gas resulting from a breaking operation, cool the hot insulating gas down, and avoids penetration of the hot insulating gas into critical parts of the circuit breaker 1. Such way the labyrinth structure 13 provides a flow induced sealing between the second enclosure 11 and the insulating nozzle 9, thereby trapping the hot insulating gas and mixing the insulating gas with cold insulating gas in the labyrinth structure 13.

In alternative or in addition, an alternative labyrinth structure 13' with alternative distant notches 14' and an alternative sealing 12' can be provided, in respect to the arcing region 6, on an opposite side of the circuit breaker 1 respectively at the first arcing contact 2 between sliding parts of the circuit breaker 1. Thus, the first arcing contact 2 may comprise a first enclosure 18 circumferentially surrounding a buffer cylinder 17 also encasing the channel 8 and arranged slidable in respect to the buffer cylinder 17. Thus, the alternative labyrinth structure 13' is provided in the first enclosure 18 and/or in the buffer cylinder 17 between the first enclosure 18 and the buffer cylinder 17 and/or in the second enclosure 11. Generally, the labyrinth structure 13' with alternative distant notches 14' and alternative sealing 12' can be provided between any sliding part of the circuit breaker 1.

The circuit breaker further comprises a ring sealing 12, which is arranged and extends circumferentially between the second enclosure 11 and the insulating nozzle 9, whereby the labyrinth structure 13 is axially arranged between the sealing 12 and the buffer volume 10. The insulating gas leaves the labyrinth structure 13 towards the sealing 12 with a lower velocity. In sum, in the labyrinth structure 13 and also the sealing increase probability that no hot gas/particles get out into dielectrically critical regions. Tests demonstrate that less burning or flakes are found inside the chamber as the labyrinth structure 13 protects the sealing.

Further, the second enclosure 11 includes an inner enclosure portion 15 and an outer enclosure portion 16. The outer enclosure portion 16 is coaxially arranged with respect to the inner enclosure portion 15. As exemplarily shown in Fig. 1, the outer enclosure portion 16 is movable relatively to the inner enclosure portion 15 along the switching axis 4. Thereby, the sealing 12 and labyrinth structure 13 are provided between the inner enclosure portion 15 and the insulating nozzle 9. The notches 14 may be distant to each other by 4,5 mm, may comprise a width and/or depth of 5 mm.

The circuit breaker 1 can include a gear system operatively coupled to at least one of the first or second arcing contact 2, 3 and the nozzle 7 for providing a translation along the switching axis. At least a portion of the gear system can be arranged at a supporting structure. The circuit breaker 1 can be provided as a single motion circuit breaker. That is to say, only one of the first and second arcing contact 2, 3 is movable along the switching axis 4. Alternatively, the circuit breaker can be a double motion circuit breaker. In other words, both of the first and the second arcing contact 2, 3 are movable along the switching axis 4.

Further, an arc-extinguishing system for extinguishing the arc 5 can be integrated in the volume upstream of the nozzle 7. The arc-extinguishing system can have a pressurizing system (puffer system). The pressurizing system can for example include a pressurizing chamber (puffer chamber) having a quenching gas contained therein. The quenching gas can be a portion of the insulation gas contained in the housing volume (outer volume) of the circuit breaker 1. The pressurizing chamber can be delimited by a chamber wall and a piston for compressing the quenching gas within the pressurizing chamber during the current breaking operation.

To this purpose, the piston moves jointly with the first arcing contact 2 so that the piston pressurizes the quenching gas within the pressurizing chamber when the first arcing contact 2 is moved away from the second contact 3 for opening the circuit breaker 1. The nozzle 7 can be adapted for blowing the pressurized quenching gas, e.g. the arc-extinguishing gas, from the volume upstream onto the arc 6 formed during the current breaking operation. The nozzle 7 can include an inlet connected to the pressurizing chamber for receiving the pressurized quenching gas from the pressurizing chamber, and the nozzle 7 outlet to the arcing region 6. The nozzle 7 is preferably made of an electrically insulating material, as for example, PTFE. The nozzle 7 can comprise a ring portion attached at one of its ends.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: circuit breaker
- 2: first arcing contact
- 3: second arcing contact
- 4: switching axis
- 5: arc
- 6: arcing region
- 7: nozzle
- 8: channel
- 9: insulating nozzle
- 10: volume
- 11: second enclosure
- 12, 12': sealing
- 13, 13': labyrinth structure
- 14, 14': notch
- 15: inner enclosure portion
- 16: outer enclosure portion
- 17: buffer cylinder
- 18: first enclosure

## Claims

1. A gas-insulated high or medium voltage circuit breaker (1) comprising:
a first arcing contact (2) and a second arcing contact (3), whereby at least one of the two arcing contacts (2, 3) is axially movable along a switching axis (4), thereby forming, during a breaking operation, an arc (5) between the first arcing contact (2) and the second arcing contact (3) in an arcing region (6),
a nozzle (7) for blowing during the breaking operation an arc-extinguishing gas to the arcing region (6);
an enclosure (11) substantially surrounding the nozzle (7) and arranged slidable in respect to the nozzle (7);
an axially extending labyrinth structure (13) comprising a plurality of distant notches (14) arranged one behind each other and provided in the enclosure (11) radially between the enclosure (11) and the nozzle (7); and
a sealing (12) arranged circumferentially between the enclosure (11) and the nozzle (7), wherein the labyrinth structure (13) is axially arranged between the sealing (12) and the buffer volume (10).

2. The gas-insulated high or medium voltage circuit breaker (1) according to the previous claim, whereby the notches (14) comprise a square-like shape or a trapezoid-like shape.

3. The gas-insulated high or medium voltage circuit breaker (1) according to any of the previous claims, whereby the nozzle (7) includes a channel (8) directed to the arcing region (6), and an insulating nozzle (9) is provided adjacent to the channel (8), for transporting the gas from the arcing region (6) to a buffer volume (10) downstream of the insulating nozzle (9).

4. The gas-insulated high or medium voltage circuit breaker (1) according to any of the previous two claims, whereby the enclosure (11) comprises an inner enclosure portion (15) and a coaxially arranged outer enclosure portion (16) and the sealing (12) and the labyrinth structure (13) are provided between the inner enclosure portion (15) and the nozzle (7) and/or the insulating nozzle (9).

5. The gas-insulated high or medium voltage circuit breaker (1) according to any of the previous claims, comprising a first enclosure (18) associated to the first arcing contact (2), substantially surrounding the buffer cylinder (17) and arranged slidable in respect to the buffer cylinder (17), whereby the labyrinth structure (13') is provided in the first enclosure (18) and/or in the buffer cylinder (17) between the first enclosure (18) and the buffer cylinder (17).

6. The gas-insulated high or medium voltage circuit breaker (1) according to any of the previous claims, comprising a metal enclosure and wherein the circuit breaker (1) is provided as metal enclosed circuit breaker (1).

7. The gas-insulated high or medium voltage circuit breaker (1) according to any of the previous claims, wherein the circuit breaker (1) is a gas-insulated circuit breaker (1) adapted to interrupt medium to high-voltages of 12 kV or more, 52 kV or more, or more than 72 kV, or 145 kV or more; and/or wherein the gas-insulated high or medium voltage circuit breaker (1) is one of a puffer-type circuit breaker, a selfblast circuit breaker, or a combination thereof.

8. A method of operating a gas-insulated high or medium voltage circuit breaker (1), the method comprising:
breaking an electric current with the high or medium voltage circuit breaker according to any one of the previous claims.

9. The method of operating a gas-insulated high or medium voltage circuit breaker (1) according to the previous claim, wherein breaking the electric current comprises:
separating the first arcing contact (2) and the second arcing contact (3) by moving at least one of the first and second arcing contact (2, 3) along the switching axis (4) to initiate a breaking operation.
